# EUROPEAN PATENT APPLICATION

(11) **EP 1 837 572 A1**
(43) Date of publication of application: **26.09.2007**
(21) Application number: 06005627.2
(22) Date of filing: 20.03.2006
(51) Int. Cl.: F16L 5/08

(54) **System for sealing a space between an inner wall of a tubular opening and at least one tube or duct at least partly received in the opening**

(71) Applicant: Beele Engineering B.V., 7122 NZ Aalten (NL)
(72) Inventor: Beele, Johannes Alfred, 7122 NZ Aalten (NL)
(74) Representative: HOFFMANN EITLE

(57) **Abstract**

A system for sealing a space between an inner wall (4) of a tubular opening (6) and at least one tube or duct (8) at least partly received in the opening such that a longitudinal direction of the opening and a longitudinal direction of the at least one tube or duct are substantially parallel to each other, wherein the system comprises at least two segmental longitudinal parts (10a;10b) for forming a plug which can be received in said space and at least two pressure plates (12b,12f) for sandwiching the plug (14) and pressing the longitudinal parts in the longitudinal direction for sealing said space, wherein the longitudinal parts (10a,10b) are each of an elastically deformable material and are each provided with an outside that comprises a plurality of outer ribs (16) having the tops spaced apart in a longitudinal direction for realizing, in use, annular contact surfaces between the sealing plug and the inner wall of the opening, and wherein each of the longitudinal parts is provided with an inside comprising a plurality of inner ribs (22) having tops spaced apart in a longitudinal direction for realizing, in use, annular contact surface between the sealing plug and the at least one tube or duct (8), wherein in the longitudinal direction the tops of the outer ribs (16) and the tops of the inner ribs (22) have alternate positions with respect to each other.

## Description

The invention relates to a system for sealing a space between an inner wall of a tubular opening and at least one tube or duct at least partly received in the opening such that a longitudinal direction of the opening and a longitudinal direction of the at least one tube or duct are substantially parallel to each other, wherein the system comprises at least two segmental longitudinal parts for forming a plug which can be received in said space and at least two pressure plates for sandwiching the plug and pressing the longitudinal parts in the longitudinal direction for sealing said space, wherein the longitudinal parts are each of an elastically deformable material and are each provided with an outside that comprises a plurality of outer ribs having tops spaced apart in a longitudinal direction for realizing, in use, annular contact surfaces between the sealing plug and the inner wall of the opening, and wherein each of the longitudinal parts is provided with an inside comprising a plurality of inner ribs having tops spaced apart in a longitudinal direction for realizing, in use, annular contact surfaces between the sealing plug and the at least one tube or duct.

A tubular opening as referred to hereinabove may comprise a tubular passage in a floor, deck, wall or partition. Such a tubular opening may also be referred to as a transit. A tubular opening may also be part of a tube in which another tube is at least partly received.

Substantially parallel is, in any case, also understood to mean a situation in which the axis of the opening and the axis of the tube or duct received in the opening include an angle of about five degrees.

A system as mentioned in the introduction will mainly be used in situations where a pipe passes through a dividing wall and where it is desired that the pipe is fixated where it passes through that wall. One could think of gas or water pipes that enter a building. The system can also be used where heavy cables, such as power cables, are passed through a wall.

A system as mentioned in the introduction may also be used, for instance, for connecting two tubes with each other so that a fluid can flow through. Such tubes may be used for, for instance, transport of water, gas, oils, liquid chemicals, etc. A space located between coaxial and overlapping parts of the tubes can then be sealed with a system as described hereinabove. It is also possible that cables for, for instance, telephone, electricity and television are fed through such tubes connected with one another.

Another possibility is using the system as a sealing between cables and pipes and protective tubes as used under roads. The system will prevent mud entering the protective pipe and ensures fixation of the cable or pipe at the entrance of the protective pipe. The latter is advantageous in situations where the ground is sinking and the cable or pipe would without the system be pressed against the protective pipe, rather than experience protection from the protective pipe. Such a system may also be used in walls of buildings, in particular foundation walls and floors but also roofs where, by means of plastic tube parts, passages are left open in the poured concrete. Tubes for water or gas, or cables can then be fed through those open passages. Of course, a passage may also be provided in a concrete plate with the aid of a boring method. The space between the duct and the inner wall of the borehole may later be sealed by a system as described above.

The system as described above can also be used in a construction of new buildings and in the construction and maintenance of ships and offshore installations. Sections in such constructions are usually formed by placing prefabricated partitions according to a predetermined plan in the dock of the shipyard. Even before the partitions are placed, feed-through tubes can be provided in the partitions, for instance with the aid of a welding method. After the duct is fed through a feed-through tube, the system described in the introduction can be provided for sealing the space between the inner wall of the feed-through tube and the feed-through duct. The sealing plug thus formed then ensures that the movement of the fed-through duct with respect to the feed-through duct by deformation of the partition during, for instance, a fire, is minimized due to the fixation effect of the system. The sealing plug further has a vibration-absorbing function so that fatigue symptoms are avoided. The sealing plug is further sound-insulating. In addition, a thermal insulation may be obtained, especially when air is locked in a feed-through tube between two of such plugs. It is further possible that the feed-through tube and the duct, cable or tube fed through it are manufactured from different metal-comprising materials.

The annular space between an inner wall of a tubular opening and at least one tube or duct is herein below often simply referred to as "the space". Inserting the longitudinal parts into the space, is often simply referred to as "inserting".

A system as described in the introduction is produced by the applicant and works satisfactorily. When the system is inserted into the space and the pressure plates sandwich the plug and press the longitudinal parts in the longitudinal direction, the elastically deformable parts deform such that the inner and outer ribs touch respectively, the inner wall of the opening and the tube or duct. The annular contact surfaces are formed and a sealing is provided.

A problem of this system is that a further pressing of the pressure plates towards each other does not consistently result in the possibility of sealing the space between the inner wall of the tubular opening and tube or duct in a situation where dimensions of the tubular opening and/or the tube or duct are different from the expected dimensions. In other words, "bridging" a larger tolerance in the diameter of the opening and/or bridging a larger tolerance in the diameter of the tube or duct is not satisfactorily possible. On further pressing the pressure plates toward each other, the longitudinal segmental parts become irreversibly deformed, often making reuse of the system impossible.

It is an object of the invention to solve, at least to some extent, at least one of these problems.

This object is achieved by a system that is according to the preamble of claim 1 and that is further characterized in that in the longitudinal direction tops of the outer ribs and tops of the inner ribs have alternate positions with respect to each other.

As the inner and outer tops alternate, rather than being for instance opposite to each other, an expansion of the longitudinal parts in the transverse direction is facilitated. Transverse expansion of the outer ribs is not compromised by transverse expansion of an inner rib and vice versa. Accordingly, the expansion in the transverse direction is to a much larger extent than the extent to which expansion occurs when the inner ribs and outer ribs are opposite each other. This enables the system to still seal off the space between the inner wall of the tubular opening and the tube or duct, even when the diameter of the opening is somewhat larger than expected and the diameter of the tube or duct is somewhat smaller than expected. Bridging a larger tolerance of the opening is now possible without irreversibly deforming the longitudinal parts. One system can be used for sealing of a space within a relatively large range of dimensions.

The system is due to its inner and outer side as profiled according to the invention designed to "transfer" longitudinal compression into enormous transverse expansion of the ribs, unlike the systems, known in the art, having, for instance, unprofiled inner and outer sides, where the elastic material is not facilitated to expand transversely as expansion of the inner and the outer side is inhibited by respectively the outer side and the inner side.

Also note that upon longitudinal compression a transverse pressure is distributed over the tops of the various ribs unlike the way transverse pressure is distributed over the whole outer side and inner side when an unprofiled plug is used.

Although the system will fixate the tube, duct or pipe in the tubular opening, the ribs, and in particular their mutual positions, allows the system still to maintain an elastic response to slight longitudinal movements and slight transverse movements of the tube, duct or pipe. The mutual positions of the ribs, thus allowing for little displacements, also reduces the likelihood that the tube, duct or pipe is subjected to the actual load provided by the pressure plates. This reduces the chance of creep-related decrease of the outer diameter of a plastic fed-through pipe. Also, when the diameter of the pipe, tube or duct reduces over time somewhat due to pressure exerted on it, the system is very unlikely to need repeated pressing of the pressure plates towards each other to maintain its sealing integrity. The system will still be able to absorb vibrations, in any case to a much greater extent than a system having an unprofiled plug.

Another advantage of a system according to the inventor is that the system can be sold with an indication of the "tolerances" in the diameters of respectively the tubular opening and the tube or duct. It will be clear to any skilled reader that the "tightness", expressed as the pressure needed to remove the system outwards of the opening, is dependent on the actual deviations in these diameters and the applied longitudinal compression of the plug. It is possible to obtain all these relationships documented prior to use of the system so that a user can make a well-informed decision to apply the system for a particular situation.

Another advantage of a system according to the invention is the possibility of reduced inventory control, given the applicability of the system for a number of different combinations of diameters of respectively the opening and the tube or duct.

In an embodiment of a system according to the invention, the inner ribs are adjacent each other and/or the outer ribs are adjacent each other.

This allows for a high density of ribs per unit of length of the longitudinal parts. The larger the number of ribs per unit of length, the better the sealing performance of the system. In other words, the system can sustain exposure to a much higher pressure difference between the pressure on one side of the tubular opening and the other side of the tubular opening before it starts leaking or before it is being removed out of the opening due to the pressure difference.

In an embodiment at least one of the inner ribs and/or at least one of the outer ribs is symmetrical. This has the advantage that there is no unequal deformation of the respective inner ribs and/or outer ribs when the ribs move in the transverse direction against the inner wall of the opening, and the at least one tube or duct, respectively. An unequal deformation would introduce a high concentration of stress which in the long term may lead to permanent deformation.

In an embodiment of a system according to the invention at least one of the tops is provided with an abutting surface that extends in the longitudinal direction. This ensures that even with the smallest of transverse expansion on pressing the longitudinal parts in the longitudinal direction, a substantial annular contact surface between the sealing plug and the inner wall of the opening is provided. When it applies to the inner rib, at least a substantial annular contact surface between the sealing plug and the at least one tube or duct is provided. As soon as contact is established, sealing rings are formed.

In an embodiment of a system according to the invention, at least one rib having an abutting surface is on either side of that abutting surface further provided with a sloped surface that extends away from the abutting surface. This ensures that when the longitudinal parts are pressed in the longitudinal direction and the respective rib moves into the transverse direction, it is possible that the annular contact surface will grow in terms of its width. The width is in this context a dimension that is parallel to the longitudinal direction.

In an embodiment of a system according to the invention at least a part of the sloped surface encloses an angle with a transverse direction of the segmental longitudinal part such that bending of the respective rib is substantially inhibited. This has the advantage that when the respective rib is in contact with either the inner wall of the opening or the surface of the at least one tube or duct, and the longitudinal parts are further pressed in the longitudinal direction, sliding of the rib along the surface to which it abuts, will not weaken the seal provided by the annular contact surface due to bending of the rib, but will continue to form a very stable annular contact surface and therefore a very stable seal. In other words, the plug's inner profile is such that the plug will glide over the surface of the tube or duct when insertion takes place and when the pressure plates are pressed towards each other.

The inventor has found that such an angle is available between 60 and 80 degrees. The inventor has found that an even better performance with respect to resistance against bending, and a higher possible number of ribs per unit of length along the longitudinal part is achievable when the angle lies between 65 and 77 degrees. Very good sealing performance is found when the angle lies between 70 and 75 degrees. At such an angle an optimum is found in terms of possible transverse expansion, number of ribs per unit of length and resistance against bending of the rib.

In an embodiment of a system according to the invention the slope of the sloped surface is substantially constant from the abutting surface up to a point where it meets its sloped surface of an adjacent inner rib. This has the advantage that a simple relationship exists between the distance over which the longitudinal parts are pressed and the growth of the width of the annular contact surfaces that provide the sealing. The predictability of the performance of the system is therewith enhanced.

In an embodiment of a system according to the invention all inner ribs and/or all outer ribs are substantially identical. As a consequence thereof, the longitudinal parts will be deformed very homogeneously when the pressure plates move to each other under the influence of the pressure applied in the longitudinal direction. High concentrations of stress are avoided, contributing to a long lifetime of the longitudinal parts and reversibility of the deformation. Energy needed for pressing the longitudinal parts is efficiently used to optimise the sealing.

In an embodiment of a system according to the invention, the system comprises a number of transport guiders for guiding the longitudinal parts in the longitudinal direction when pressure is applied in that direction and wherein each of the longitudinal segmental parts and at least one of the pressure plates is provided with a through hole having an axial direction extending in the longitudinal direction for fittingly receiving one of the transport guiders so that the transport guiders can extend from one of the pressure plates to the other pressure plate when sandwiching the longitudinal parts, wherein a middle section of each transport guider is provided with a smooth surface and one or both ends of each transport guider is provided with a threaded external surface.

The transport guiders guide the compression of the longitudinal segmental parts in the longitudinal direction. As the transport guiders have a smooth surface and extend through the through holes of the longitudinal segmental parts, the sealing remains intact when the longitudinal segmental parts are being compressed and slide along the guiders. Furthermore, as each transport guider is at at least one end provided with a threaded external surface, it is possible to apply the pressure in the longitudinal direction by rotating the transport guider whilst the threaded end engages in an internally threaded bore of a plate than can consequently apply pressure to the longitudinal parts. Accordingly, the system does not require any further pressure applying devices.

In an embodiment of the system according to the invention at least one of the through holes of at least one of the plates is provided with a threaded internal surface for connectingly receiving a threaded external surface of one of the transport guiders. Although it is possible to apply an additional nut, it is not necessary to apply such an additional element. This allows for a relatively easy instalment of the system with very few parts.

In a system according to an embodiment of the invention all the through holes of at least one of the plates are provided with a threaded internal surface. In such an embodiment it is possible that only the guiders themselves are rotated from one end of the system and pull the plates together to sandwich the plug between the plates.

In an embodiment of a system according to the invention at least one of the pressure plates and/or at least one of the transport guiders comprises a hard plastic surface. Contact between two metal parts, which are likely to be slightly different in composition, does not need to occur. This avoids the occurrence of corrosion, which often hinders dismantling of the system. Furthermore, should the pressure plates need to be pressed closer to one another, the absence of corrosion would be useful.

In an embodiment of a system according to the invention one of the pressure plates has a transverse cross section that is larger than a transverse cross section of the plug, even when the plug is pressed in the longitudinal direction for sealing. This means that the respective larger pressure plate, can itself not enter the tubular opening. This larger pressure plate will abut the outer rims of the tubular opening. When the pressure plates are being pressed together, only the smaller pressure plate, i.e. the one that fits in the tubular opening, can move up towards the other pressure plate. This ensures that the larger pressure plate present at one side of the system remains at a stable position when the system is inserted and applied such that a sealing is provided. The positioning and accessibility of the system is with such an embodiment predictable, and as such of benefit to design and easy repair and maintenance work. It furthermore means that the transit can actually have a reduced length, as the length is optimally used in the sense that right at the entrance of the tubular opening the sealing is applied. When such an embodiment is applied on either side of a tubular opening, it is even possible to reduce the pressure of the gas locked in between those two systems. An increase of pressure of this gas trapped between the two systems, does not directly result in a superatmospheric pressure as the gas between the two systems had from the outset a subatmospheric pressure.

Further, when the axial direction of the tubular opening has a vertical component, the system cannot fall through the opening when the larger plate is applied at the upper side of the opening.

The invention is further related to a tubular opening having at least one tube or duct, at least partly received in the opening such that a longitudinal direction of the opening and a longitudinal direction of the at least one tube or duct are substantially parallel to each other, wherein an angular space between an inner wall of the tubular opening and the at least one tube or duct is sealed on either side and when the sealing is on at least one side provided by a system according to any of the embodiments described above.

The invention is further elucidated by describing examples with the aid of a drawing. In the drawing:
Fig. 1 shows a part-exploded perspective view of an embodiment of a system according to the invention in use;
Fig. 2 shows schematically a partial cross section of a segmental longitudinal part of a system according to an embodiment of the invention;
Fig. 3 shows schematically in more detail a part of the cross section shown in Fig. 2;
Fig. 4 shows schematically and in partial cross section an embodiment of a system according to the invention as inserted but before sealing;
Fig. 5 shows the embodiment shown in Fig. 4 when sealing;
Fig. 6 shows schematically an embodiment of a tubular opening in which two embodiments of a system according to the invention have been inserted;
Fig. 7 shows schematically a front part of an embodiment of a system according to the invention;
Fig. 8 shows schematically a front view of a part of an embodiment of a system according to the invention wherein half a front plate and half a back plate are shown by dashed lines;
Fig. 9 shows in more detail a part of an embodiment of a system according to the invention;
Fig. 10 shows a view of the part shown in Fig. 9 in a direction of arrow A.
Fig. 11 shows schematically an embodiment of a tubular opening in which two embodiments of a system according to the invention have been inserted.

In the drawings like parts are provided with like references.

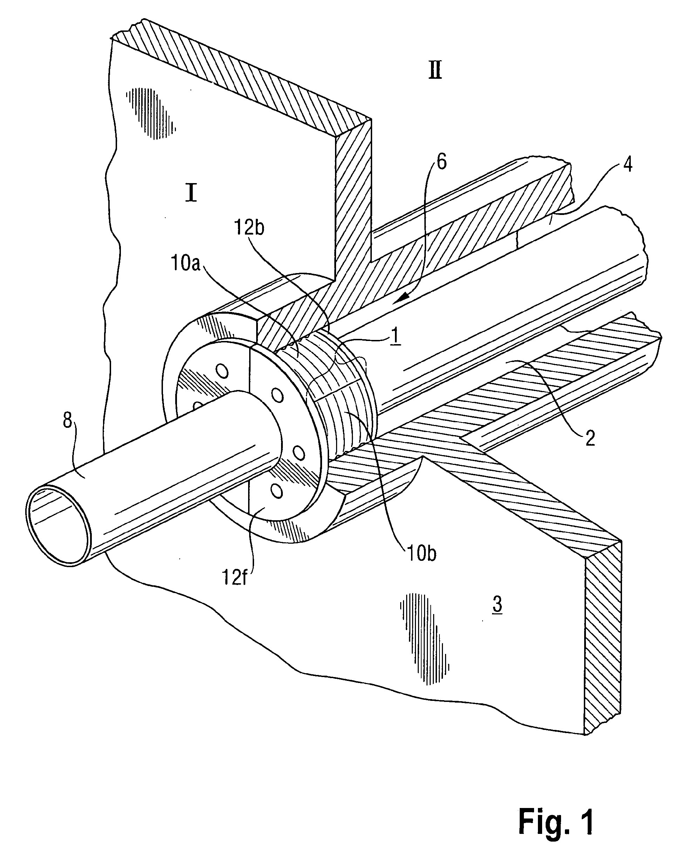

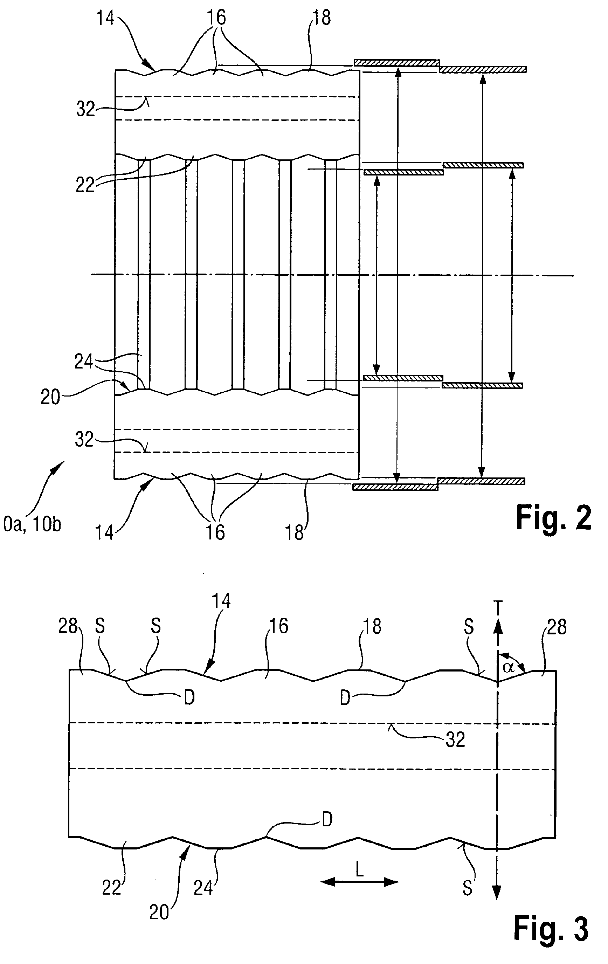

Fig. 1 shows a part-exploded perspective view of a tubular opening 6 in a partition or divider 3 that divides two compartments I and II. A tube, pipe or duct 8 is received in the opening 6 and extends in a longitudinal direction of the opening 6. For sealing a space 2 between an inner wall 4 of the tubular opening 6 and the tube, pipe or duct 8 a system 1 is employed. The system 1 comprises two segmental longitudinal parts 10a, 10b that together can form a plug which can be received (as shown) in such a space 2. System 1 further comprises pressure plates 12f, 12b for sandwiching the plug and pressing the longitudinal parts 10a, 10b in the longitudinal direction for sealing space 2. Both the pressure plate 12f at the "front" of the opening and the pressure plate 12b at the "back" of the opening comprise multiple parts allowing for collaring a pipe, tube or duct extending through the opening. The longitudinal parts will further be discussed with reference to Fig. 2 and Fig. 3.

Fig. 2 shows one of the segmental longitudinal parts 10a, 10b, a view seen when viewing the inside of the segmental longitudinal part 10a, 10b. The upper part of Fig. 2 is enlarged shown in Fig. 3. The upper and lower part are each a view of a cross section that is taken along the longitudinal direction of the longitudinal segmental part. The part that in Fig. 2 is shown between the two cross sections is a part of the segmental part that is in use pressed against the pipe, tube or duct 8. The longitudinal parts 10a, 10b are each of an elastically deformable material, typically rubber. Each of the segmental longitudinal parts 10a, 10b is provided with an outside 14 that comprises a plurality of outer ribs 16 having tops 18 spaced apart in the longitudinal direction for realizing, in use, angular contact surfaces between the sealing plug and the inner wall 4 of the opening 6. Each of the longitudinal parts 10a, 10b is also provided with an inside 20 comprising a plurality of inner ribs 22 having tops 24 spaced apart in the longitudinal direction for realizing, in use, angular contact surfaces between the sealing plug and the pipe, tube or duct 8. In Fig. 3 the longitudinal direction is indicated by the arrows L. Seen in the longitudinal direction L, the tops 18 of the outer ribs 16 an the tops 24 of the inner ribs 22 have alternate positions with respect to each other. As shown in both Fig. 2 and 3 it is also possible that the inner ribs 22 are adjacent to each other. Also the outer ribs 16 may be adjacent to each other. Furthermore, the inner ribs 22 may be symmetrical and also the outer ribs 16 may be symmetrical with respect to a transverse direction. Although it is possible that these geometries apply to only one of the inner or outer ribs 22, 16, it is preferable that these geometries apply to all the inner ribs 22 and outer ribs 16.

As shown in Fig. 2 and 3 it is also possible that at least one of the tops 18, 24 is provided with an abutting surface that extends in the longitudinal direction L. The ribs 16, 22, having an abutting surface, may on either side of that abutting surface further be provided with a sloped surface S that extends away from the abutting surface.

At least a part of the sloped surface S may enclose an angle α with a transverse direction T of the segmental longitudinal part 10a, 10b such that bending of the respective rib 16, 22 is substantially inhibited. The angle α may be between 60 and 80 degrees, is however preferably between 65 and 77 degrees, and even more preferably between 70 and 75 degrees. The optimal angle may be dependent on the hardness of the rubber, and may be found by routine experiments by one skilled in the art.

The slope of the sloped surface S is substantially constant from the abutting surface up to a point D where it meets the sloped surface of an adjacent rib 16, 22. Note that the sloped surfaces S of the inner ribs 22 and the sloped surface S of the outer ribs 16 are in a transverse direction T opposite each other. Also note that the meeting point D of the sloped surfaces S of two adjacent ribs is in the transverse direction T opposite a top 18, 24.

It is furthermore pointed out that the sloped surfaces S may be substantially the same. In fact, it is possible that all inner ribs 22 and/or all outer ribs 16 are substantially identical.

The two outer ribs 28, of which one is disposed at one end of the longitudinal part and one is disposed at the other end of the longitudinal part, have each a volume that is more than half the volume of an outer rib that lies between those outer ribs 28. The abutting surface at the tops of these outer ribs 28 extend in a longitudinal direction L up to a length that is almost as long as the length in the longitudinal direction of each of the abutting surfaces that lie between those outer ribs 28. In this example, there are five complete inner ribs and four complete outer ribs.

The description of the longitudinal parts of which detailed views are shown in Fig. 2 and 3 applies to the longitudinal parts when not in use, i.e. when not pressed into the longitudinal direction L.

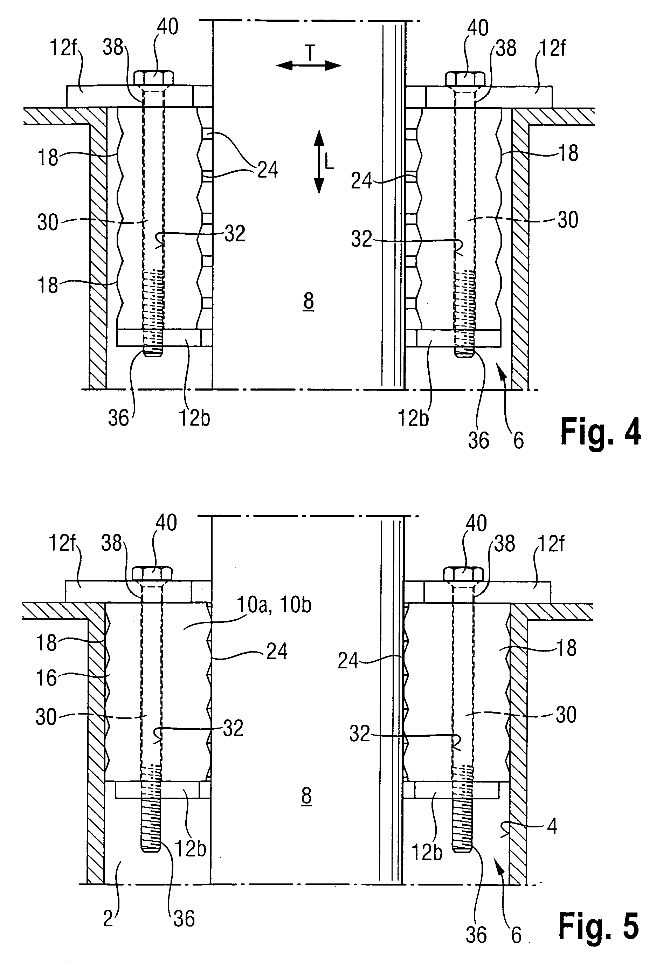

For a further description of an embodiment of a system according to the invention, reference is made to Fig. 4 and 5.

Fig. 4 shows schematically in cross section of an embodiment of a system according to the invention as inserted in a tubular opening 6. A tube, pipe or duct 8 is received in the opening 6 such that the longitudinal direction of the opening 6 and the longitudinal direction of the tube, pipe or duct 8 are substantially parallel to each other. An embodiment of a system according to the invention as shown in Fig. 4 comprises a number of transport guiders 30 for guiding the longitudinal parts 10a, 10b in the longitudinal direction L when pressure is applied in that direction. In this embodiment each longitudinal segmental part 10a, 10b is provided with a through hole 32 as shown in dashed lines in Fig. 2 and 3. The through hole 32 has an axial direction that runs parallel to the longitudinal direction L for fittingly receiving one of the transport guiders 30 so that the transport guiders 30 can extend from one of the pressure plates 12f, 12b to the other pressure plate 12f, 12b when sandwiching the longitudinal parts 10a, 10b. The middle section of this transport guider 30 is provided with a smooth surface. One end 36 of the transport guider 30 is provided with a threaded external surface. The other end may be provided with a grip 40 for rotating the transport guider around its axis. The middle section extends between the grip 40 and the end that has a threaded external surface. The pressure plate 12b is provided with through holes 38 so that these can be lined up with the through holes 32 in the longitudinal parts and that the transport guider 30 can extend through both through holes 32, 38.

In the embodiment shown in Fig. 4 the pressure plate 12 has through holes 39 which are provided with a smooth internal surface.

The pressure plates of the embodiments shown in Fig. 4 and 5 are not identical. The pressure plate at the "front", pressure plate 12f has a transverse cross section that is larger than a transverse cross section of the plug, even when the plug is pressed in the longitudinal direction for sealing. This means that the front pressure plate 12f does not fit in a tubular opening 6 which is intended to be sealed off by the system. As a consequence thereof the front pressure plate 12f will remain outside the tubular opening 6 and will abut the circumferential front of that tubular opening.

In the embodiment shown in Fig. 4, each transport guider 30 is provided with a grip 40 that in use remains outside the tubular opening 6 and on a side of the pressure plate 12f that is opposite the side that abuts the segmental longitudinal part 10a, 10b.

The dimensions of at least pressure plate 12b is such that the plate can freely move in a longitudinal direction between the tube 8 and the inner wall 4 of the tubular opening 6. Preferably as much rubber as possible is "covered" by a plate to apply the pressure homogeneously over the plug and to avoid that part of the rubber is squeezed out of an annular slit between the plate and the inner wall 4 and the tube 8 respectively. The plates 12f, 12b may be provided with rims that are rounded off to avoid cutting into the rubber.

The embodiment shown in Fig. 4 works as follows. After insertion of the system so that a situation is reached which is schematically depicted in Fig. 4, the transport guiders are rotated around their axis by rotating the grip 40. The threaded end 36, fittingly received in threaded bores of pressure plate 12b, ensures that during the rotation of the transport guiders the pressure plate 12b is moved towards the pressure plate 12f. The segmental longitudinal parts 10a, 10b sandwiched between the pressure plates 12f, 12b are as a consequence thereof pressed into the longitudinal direction L. The inner tops 24 and the outer tops 18 form annular contact surfaces between the sealing plug (formed by the segmental longitudinal parts 10a, 10b) and the inner wall 4 of the opening 6. Also the inner tops 24 will at some stage form an annular contact surface between the sealing plug (formed by the segmental longitudinal parts 10a, 10b) and the tube, pipe or duct 8. This is shown in Fig. 5.

It will be understood that a system according to the invention can be used for sealing the space 2 between an inner wall 4 of a tubular opening and the pipe, duct or tube 8, to a certain extent independent of the diameter of the pipe, tube or duct 8 and the diameter of the tubular opening 6. For example, the system optimally designed for sealing a space 2 between an inner wall of a tubular opening 6 having a diameter of 110 mm and a pipe, tube or duct having a diameter of 60 mm, can for instance also be used for filling a space 2 between an inner wall of a tubular opening 6 having a diameter of 107-112 mm and a pipe, tube or duct 8 having a diameter of 55-60 mm. The longitudinal parts for such a system are schematically shown in a partial cross section in Fig. 2. The thick black lines show possible transverse positions of the inner tops 24 and outer tops 18 after pressing the pressure plates 12f, 12b together as explained hereabove.

It is possible that the pressure plates 12f, 12b comprise a hard plastic surface. This would avoid the occurrence of corrosion which often leads to an undismantable system. It is in fact possible that the complete pressure plate 12f, 12b is made of a hard plastic. It has further turned out to be possible to even produce the transport guider 30 out of such a hard plastic. Suitable hard plastics are polyetherimide (PEI) or, alternatively, polyethersulfonimide (PES).

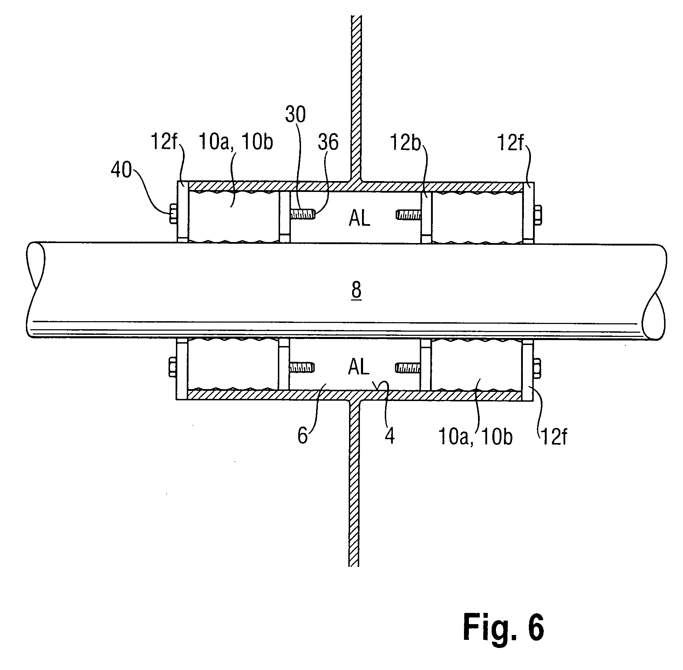

Fig. 6 shows schematically a cross section of a tubular opening 6 having a tube, pipe or duct 8 received in the opening 6 such that the longitudinal direction of the opening 6 and the longitudinal direction of the tube, duct or pipe 8 are substantially parallel to each other. An annular space between the inner wall 4 of the tubular opening 6 and the pipe, tube or duct 8 is sealed on either side by an embodiment of a system according to the invention. It is pointed out that once the outer tops 18 and the inner tops 24 form the annular contact surfaces with respectively the inner wall 4 of the tubular opening 6 and the surface of the pipe, tube or duct 8, the air trapped between those two systems in airlock AL, a further pressurized sandwiching of the longitudinal parts 10a, 10b will in this particular embodiment result in a reduction of the air pressure of the air in the airlock AL. The further pressure plate 12b is pressed in the direction of pressure plate 12f of the very same system, the further the pressure in airlock AL reduces. This contributes to the tightness of the respective sealing systems in the tubular opening 6. Furthermore, when due to a temperature increase the pressure in the airlock AL increases, the increase in pressure will not straight away result in a superatmospheric pressure as the original pressure before the temperature increase would have been subatmospheric.

Although the schematic embodiments depicted in Figs. 4, 5 and 6 show that the pressure plate at the front, pressure plate 12f, has the same thickness as the pressure plate at the back, pressure plate 12b, it may be possible that the pressure plate at the front, pressure plate 12f, is actually much thicker or much thinner than the pressure plate at the back, pressure plate 12b.

It has turned out that a system as schematically shown in Figs. 4, 5 and 6 can sustain pressures up to 8 bar and even higher. The system shown in Figs. 4, 5 and 6 can also be applied for sealing a space 2 between a tubular opening 6 and a tube, pipe or duct 8 when one or both of the tubular openings 6 and pipe, tube or duct 8 has a cross section that is not perfectly circular but is for instance somewhat elliptical. It has turned out that a system according to the invention can easily be removed and replaced in either the very same tubular opening with same pipe, tube or duct or a new pipe, tube or duct, or in another tubular opening with dimensions that fall within the range which can be covered when the system is subjected to expansion.

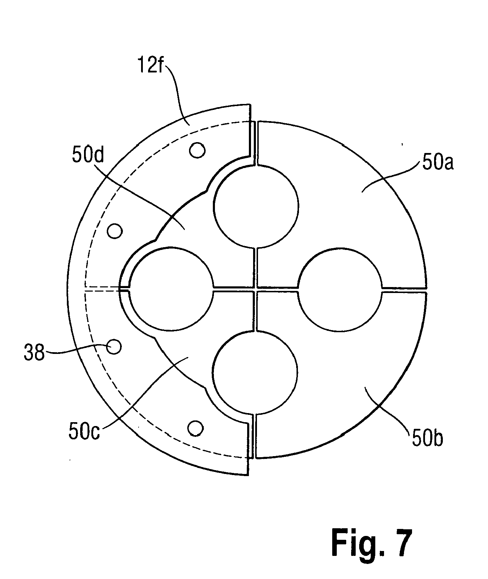

Fig. 7 shows a front view of parts of an embodiment of a system according to the invention. This embodiment is suitable for sealing the space 2 between the inner wall 4 of a tubular opening 6 and four pipes, tubes or ducts as received in the opening 6. The sealing plug can be formed by four segmental longitudinal parts 50a, 50b, 50c, 50d. Also a part of front pressure plate 12f is shown.

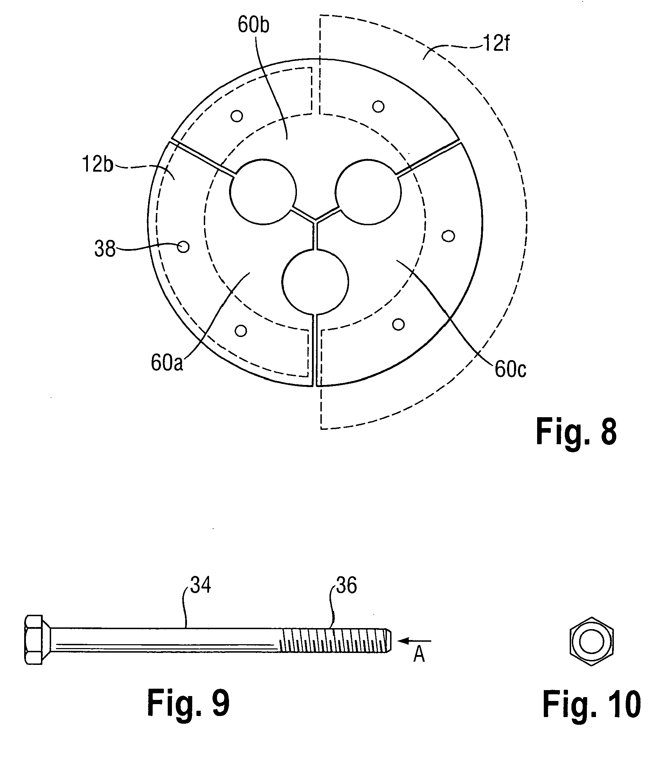

Fig. 8 shows schematically a front view of three segmental longitudinal parts 60a, 60b, 60c, which together form a plug that can seal up a space between the inner wall 4 of a tubular opening 6 and three pipes, tubes or ducts extending through the tubular opening.

Fig. 8 also shows in dashed lines the contours of half a back pressure plate 12b and of half a front pressure plate 12f. Ideally the pressure plates cover almost all the rubber.

Fig. 9 shows a transport guider 30 in more detail. The middle section 34 is provided with a smooth surface and one end 36 is provided with a threaded external surface. A grip 40 is provided at the other end of the transport guider 30. From the grip the guider tapers into the middle section of the transport guider 30. The grip 40 may be a bolt head.

Fig. 10 shows the transport guider of Fig. 9 as viewed in the direction of arrow 4.

The front pressure plate 12f may be provided with a through hole 38 having a cone-shaped opening for fittingly receiving the tapered connection transport guider 30. An embodiment of a system according to the invention having such a transport guider and such a through hole opening is less prone to being damaged, especially when the transport guider and the pressure plate are fabricated out of a hard plastic, such as polyetherimide (PEI) or polyethersulfonimide (PES). The fabrication process may involve moulding and/or machining.

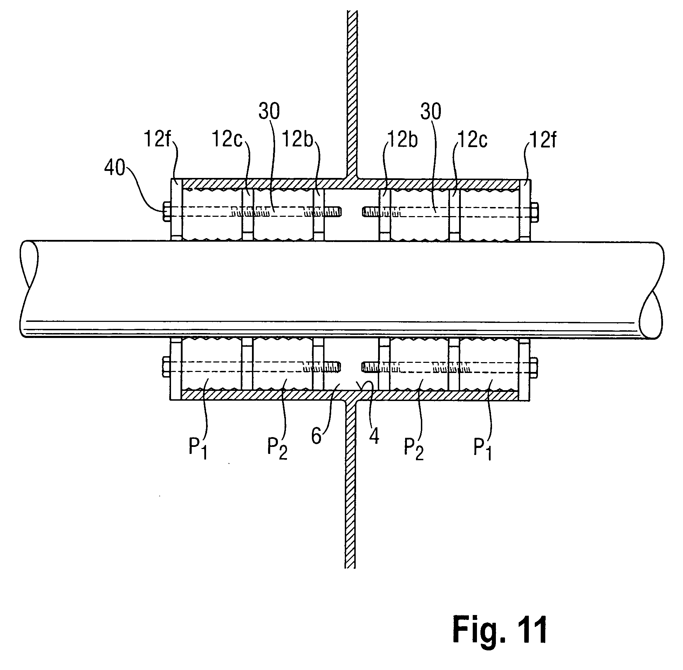

Fig. 11 shows schematically a cross-section of a tubular opening having on both ends an embodiment of a system according to the invention inserted. Each of those systems comprises two sets of at least two segmental parts for forming the plugs P1, P2. Each of the systems further comprises three pressure plates 12f, 12b, 12c for sandwiching the at least two plugs P1, P2 such that one of the pressure plates 12c is situated between the two plugs P1, P2. The transport guiders 30 extend through through holes from the front pressure plate 12f to back pressure plate 12b via a through hole in pressure plate 12c. Some of the transport guiders are provided with a threaded external surface in a middle section of the guider for engagement with a threaded internal surface of a through hole in the middle pressure plate 12 c. Other transport guiders are as described where the embodiment shown in Fig. 4 and 5 is discussed.

It will be clear that the longitudinal parts of the plug P1 and the longitudinal parts of the plug P2 can independently of each other be compressed in the longitudinal direction. An advantage is that the system can then be much longer without the need to apply very high forces to each of the screws which act both as transport guider and as drivable means for applying the pressure to compress the longitudinal parts. It will be clear that the system can thus be a modular system that not only can provide a very good tightness of the sealing but also a system that can accommodate for different diameters of one or both of the tubular opening and the tube or duct along the longitudinal direction. The larger the diameter of the pressure plates, the more plugs can be included in the system as the larger pressure plates allow for more transport guiders, so that each plug can be pressurized by its own set of screws that pressure the respective plug.

The invention is by no means limited to the embodiments shown in the drawings and described hereinabove. Many variations are possible. Although it is preferred that both pressure plates and transport guiders are fabricated from a plastic material to avoid corrosion in corrosive environments, it is of course equally possible that the transport guiders and/or the pressure plates are fabricated from a metal. Although it is preferred that the back pressure plate 12b is provided with a through hole having an internal threaded surface, and the transport guider itself is provided with at one end a threaded external surface and on the other hand a grip, it is equally possible that a combination of bolts and nuts is used. In order to obtain a tubular opening that is in a longitudinal direction as short as possible, it is preferential that the outer ribs are adjacent to each other and that the inner ribs are adjacent to each other. However, it is also possible to spatially separate the outer ribs and to spatially separate the inner ribs.

Those skilled in the art will find that many dimensions of the system can be engineered within the framework of the invention. By routine experiments and basic engineering calculations, it is possible to obtain a system that expands much in transverse direction through a reduction in longitudinal length, or design a system with the opposite effect, i.e. a system with a small transverse expansion per reduction of length in longitudinal direction.

It will be understood that a longer length of the longitudinal parts will allow for a larger number of ribs. This, in turn, means that a higher pressure is needed to move the system outside the tubular opening. In most embodiments, only a higher pressure on the "backside" (backplate 12b) of the system may result in moving the system out of the tubular opening (due to the frontplate 12f abutting the circumferential outer rim of the opening).

In particular in a situation where both sides of the opening are provided with such a system according to an embodiment of the invention, the pressure between the two plugs can only increase due to an increase of the temperature of the air locked in between those plugs. As already explained above, this air may have a subatmospheric pressure, so that removal of any of the systems seems only possible under very extreme conditions.

As shown in Fig. 7 the pressure plate may have contours to avoid contacting one of the pipes, tubes or ducts. It is also possible that the pressure plate extends through the space available between the pipes, tubes or ducts where a plurality of pipes, tubes or ducts is received in the opening.

The elastic material employed for the production of the segmental longitudinal parts, is preferably of a fire-resistant quality. The rubber may be designed such that it expands upon exposure to elevated temperatures. It is also possible to use a silicon rubber. A suitable EPDM may also be employed. The hardness may, for instance, be 70 Shore A. Also an electrically conductive rubber is among the possibilities. During the manufacture of the longitudinal parts, use will usually be made of a mold suitable for this purpose. Such a production process is known per se. For instance, injection molding or compression molding may be used.

Although, preferably, the system has a substantially cylindrical design, a deviation from the shape is also among the possibilities. Thus, the system can be designed such that the system is suitable for tubular openings which are quadrangular and/or rectangular. Embodiments suitable for multi-angular openings are not precluded either. Even embodiments for other non-circular, such as for oval-shaped tube openings, are among the possibilities. The same holds true for the suitability with regard to cables, ducts or tubes to be fed through the tubular opening.

As shown, for instance in Fig. 1, the pressure plates will be composed of multiple segmental parts. In use, the positions where the parts meet each other, are preferably chosen to be different from the positions where the segmental longitudinal parts of the plug meet each other. This enhances mechanical stability. It is also possible to have parts of one plate such that they overlap each other.

The system can be designed such that, in use, tubes and the like with a cross section deviating from the circular shape can be enclosed by the system. If desired, the skilled person will be able to adjust the dimensions to the circumstances, within the scope of the invention.

These variations are all understood to fall within the scope of the invention.

## Claims

1. A system for sealing a space between an inner wall of a tubular opening and at least one tube or duct at least partly received in the opening such that a longitudinal direction of the opening and a longitudinal direction of the at least one tube or duct are substantially parallel to each other, wherein the system comprises at least two segmental longitudinal parts for forming a plug which can be received in said space and at least two pressure plates for sandwiching the plug and pressing the longitudinal parts in the longitudinal direction for sealing said space, wherein the longitudinal parts are each of an elastically deformable material and are each provided with an outside that comprises a plurality of outer ribs having the tops spaced apart in a longitudinal direction for realizing, in use, annular contact surfaces between the sealing plug and the inner wall of the opening, and wherein each of the longitudinal parts is provided with an inside comprising a plurality of inner ribs having tops spaced apart in a longitudinal direction for realizing, in use, annular contact surface between the sealing plug and the at least one tube or duct, wherein in the longitudinal direction the tops of the outer ribs and the tops of the inner ribs have alternate positions with respect to each other.

2. A system according to claim 1, wherein the inner ribs are adjacent to each other and/or the outer ribs are adjacent to each other.

3. A system according to claim 1 or claim 2, wherein at least one of the inner ribs and/or at least one of the outer ribs is symmetrical.

4. A system according to claim 1, 2 or 3, wherein at least one of the tops is provided with an abutting surface that extends in the longitudinal direction.

5. A system according to claim 4, wherein at least one rib having an abutting surface is on either side of that abutting surface further provided with a sloped surface that extends away from the abutting surface.

6. A system according to claim 5, wherein at least a part of the sloped surface encloses an angle with a transverse direction of the segmental longitudinal part such that bending of the respective rib is substantially inhibited.

7. A system according to claim 6, wherein the angle is between 60 and 80 degrees, preferably between 65 and 77 degrees and even more preferably between 70 and 75 degrees.

8. A system according to claim 6 or 7, wherein the slope of the sloped surface is substantially constant from the abutting surface up to a point where it meets a sloped surface of an adjacent rib.

9. A system according to any one claims 5-8, wherein the sloped surfaces of inner ribs and the sloped surfaces of outer ribs are in a transverse direction opposite each other.

10. A system according to claim 8, wherein a meeting point of sloped surfaces of two adjacent ribs is in a transverse direction opposite a top.

11. A system according to any one of claims 5-10, wherein the slopes of the sloped surfaces are substantially the same.

12. A system according to any one of the previous claims, wherein all inner ribs and/or all outer ribs are substantially identical.

13. A system according to any one of the previous claims, wherein the system comprises a number of transport guiders for guiding the longitudinal parts in the longitudinal direction when pressure is applied in that direction and wherein each of the longitudinal segmental parts and at least one of the pressure plates is provided with a through hole having an axial direction extending in the longitudinal direction for fittingly receiving one of the transport guiders so that the transport guiders can extend from one of the pressure plates to the other pressure plate when sandwiching the longitudinal parts, wherein a middle section of each transport guider is provided with a smooth surface and one or both ends of each transport guider is provided with a threaded external surface.

14. A system according to claim 13, wherein at least one of the through holes of at least one of the plates is provided with a threaded internal surface for connectingly receiving a threaded external surface of one of the transport guiders.

15. A system according to claim 14, wherein all the through holes of at least one of the plates is provided with a threaded internal surface.

16. A system according to claim 13 or 14, wherein at least one of the pressure plates and/or at least one of the transport guiders comprises a hard plastic surface.

17. A system according to any one of the previous claims, wherein one of the pressure plates has a transverse cross section that is larger than a transverse cross section of the plug, even when the plug is pressed in the longitudinal direction for sealing.

18. A system according to any one of the previous claims, wherein the system comprises at least two sets of at least two segmental longitudinal parts for forming at least two plugs, wherein the system further comprises at least three pressure plates for sandwiching the at least two plugs such that one of the pressure plates is situated between the two plugs.

19. A system according to claim 18, wherein the two plugs are separately from each other pressable into the longitudinal direction.

20. A tubular opening having at least one tube or duct at least partly received in the opening such that a longitudinal direction of the opening and a longitudinal direction of the at least one tube or duct are substantially parallel to each other, wherein an annular space between an inner wall of the tubular opening and the at least one tube or duct is sealed on either side and wherein the sealing is on at least one side provided by a system as described in any one of the previous claims.

21. A tubular opening according to claim 18, wherein both sides of the tubular opening are provided with a system as described in claim 17.
